# EUROPEAN PATENT APPLICATION

(11) **EP 4 742 181 A1**
(43) Date of publication of application: **13.05.2026**
(21) Application number: 24211597.0
(22) Date of filing: 07.11.2024
(51) Int. Cl.: G06V 10/774, G06V 20/56

(54) **A METHOD FOR A TRAINING AND/OR TESTING OF A MACHINE LEARNING SYSTEM**

(71) Applicant: Robert Bosch GmbH, 70442 Stuttgart (DE); CARIAD SE, 38442 Wolfsburg (DE)
(72) Inventor: Borges, Julio, 70176 Stuttgart (DE); Kugele, Alexander, 70806 Kornwestheim (DE); Laube, Kevin Alexander, 72108 Rottenburg am Neckar (DE); Cheng, Shin-I, 70190 Stuttgart (DE); Youett, Evgenia, 38440 Wolfsburg (DE)
(74) Representative: Bösherz Goebel Patentanwälte

(57) **Abstract**

The invention relates to a method (100) for a training and/or testing of a machine learning system (50) for a specific technical application, comprising:
- Providing (101) at least one instruction (310) for an image generation process (340) to generate synthetic images (320) that represent a scene specific to the application,
- Providing (102) at least one layout specification (330) that specifies spatial restrictions for the generation process (340),
- Providing (103) a classification specification (350) that provides different classes for the represented scene,
- Dividing (104) the different classes of the classification specification into at least two groups that represent different levels of relevance to the application,
- Determining (105) at least one modification for the layout specification (330) based on the divided classes,
- Initiating (106) the generation process (340) to generate the images (320) based on the at least one instruction (310) and the at least one modified layout specification (330).

## Description

The invention relates to a method for a training and/or testing of a machine learning system. Furthermore, the invention relates to a machine learning system, computer program, an apparatus, and a storage medium for this purpose.

### State of the art

Generative diffusion models like Stable Diffusion, when paired with ControlNet, have ushered in a new era of applications with controllable spatial layouts. These models, fine-tuned on proprietary image datasets, are capable of transforming images from driving simulators into photorealistic outputs closely resembling footage from vehicle cameras. Additionally, these images can be dynamically altered using text prompts.

A common solution for image synthesis is disclosed by Rombach, Robin, et al. "High-resolution image synthesis with latent diffusion models." Proceedings of the IEEE/CVF conference on computer vision and pattern recognition. 2022.

### Disclosure of the invention

According to aspects of the invention a method with the features of claim 1, a machine learning system with the features of claim 9, a computer program with the features of claim 10, a data processing apparatus with the features of claim 11 as well as a computer-readable storage medium with the features of claim 12 are provided. Further features and details of the invention are disclosed in the respective dependent claims, the description and the drawings. Features and details described in the context to the method according to the invention also correspond to the machine learning system according to the invention, the computer program according to the invention, the data processing apparatus according to the invention as well as the computer-readable storage medium according to the invention, and vice versa in each case.

According to an aspect of the invention a method, particularly for a training and/or testing of a machine learning system for a specific - and particularly technical - application, comprises (preferably as automatically carried out steps):
- Providing at least one instruction for an image generation process to generate synthetic images that represent a scene specific to said application or a specific technical application,
- Providing at least one layout specification that specifies spatial restrictions for the generation process, wherein the spatial restrictions are particularly associated with different pixels of the images,
- Providing a classification specification that provides different classes for the represented scene, particularly for the images,
- Dividing the different classes of the classification specification into at least (or into exactly) two groups that represent different levels of relevance to the application, wherein the groups and/or the levels of relevance are preferably manually predefined, wherein, preferably, each of the pixels of the layout specification are then mapped to one of the groups,
- Determining at least one modification for the layout specification based on the divided classes, preferably by removing restrictions for pixels that are mapped to a particular group,
- Initiating the generation process to generate the images based on the at least one instruction and the at least one modified layout specification.

The method allows to improve the training and/or testing of machine learning systems for specific technical applications by generating synthetic images that accurately reflect the target environment. Using the different groups, the method may restrict the generation process in essential areas in the image while allowing flexibility in less critical areas. This leads to more diverse and representative training data, enhancing the accuracy and performance of the machine learning system. By focusing on relevant classes, the system can learn to identify and interpret crucial information within the synthetic images, leading to improved decision-making in the specific application.

Each of the above-mentioned method steps may be carried out automatically. For example, the instructions and/or the at least one layout specification and/or the classification specification may be provided as digital data, for example on the basis of a user input. The division and/or determination may be carried out by a computer program using a predefined set of rules. The initiation of the generation process may be carried out using a digital interface to an image generation model that uses the at least one instruction and the at least one modified layout specification as digital inputs. The at least one instruction may comprise a text prompt and/or at least one initial image, particularly from a simulator like a driving simulator and/or from a camera, and/or the like.

Generative models, particularly generative diffusion models such as Stable Diffusion, can convert images from simulators like driving simulators into photorealistic outputs that are very similar to the images from vehicle cameras. In other words, based on the images from a driving simulator, synthetic images can be generated by a generative model with a higher degree of photorealism. In addition, the generated images may be dynamically modified with the help of text input, particularly prompting.

The generated images may then be used for training a machine learning system. This may be done using two primary inputs: the layout specification, particularly in the form of a conditional spatial layout, which may use edge detection methods such as Canny or HED to structure the layout, and instructions like a descriptive text prompt to define overarching image features, such as a snowy road.

The invention particularly addresses the needs of automated driving and presents an approach that strikes a balance between variety and accuracy in image generation. One aim may be to create edge representations that emphasise critical objects such as roads and road users, while less important areas can still be freely interpreted by the generative model, increasing the variety of images output without compromising the accuracy of key elements.

A combination of a base image, a semantic label map, a text description and layout information (e.g. from HED or Canny edges) may be used. A mask may be created from the semantic label map to isolate important classes. This mask may then be used to filter the layout condition, removing edge information for non-critical classes. Images may then be generated using this layout information. This approach aims to achieve a balance between image diversity and fidelity.

It is possible that the method further comprises: Providing training and/or evaluation data for the training and/or testing of the machine learning system based on the generated images. That means, particularly, that the training and/or evaluation data may comprise the generated images and/or further modified generated images (optionally, by using further processing steps). This allows to obtain high-quality training and/or testing data for any specific application using the method according to the invention. It is particular advantageous for applications like an object and/or scene detection based on images that are recorded by a vehicle.

It is also possible that the method further comprises: Carrying out the training and/or testing of the machine learning system using the generated images as training and/or evaluation data, particularly for the training and/or testing of the machine learning system for the specific technical application, particularly an object and/or scene detection based on images that are recorded by a vehicle.

It is further possible that the generation process is spatially constrained differently, particularly controlled by the at least one modified layout specification. The generation process may thereby be more constrained in spatial regions of the images where pixels of the images are classified into at least a first one of the groups for higher relevance to the application and may be less constrained in spatial regions of the images where pixels of the images are classified into at least a second one of the groups for lower relevance to the application. It is therefore possible that the spatial layout of the generated images can be dynamically adjusted based on the classification of its elements. This means areas containing pixels classified as highly relevant to the application, such as roads or vehicles in an autonomous driving scenario, will have more defined and constrained spatial layouts. Conversely, regions with pixels classified as less relevant, like background scenery, will exhibit a more relaxed and flexible layout. The more constrained parts of the images may be controlled in the generation process in a way that is predetermined by the application. This targeted control over image composition enhances the accuracy and realism of crucial elements while allowing for greater variation and diversity in less important areas.

It is also possible that the layout specification specifies the spatial restrictions in relation to the different classes. Furthermore, the determination of the at least one modification may comprise: removing those of the spatial restrictions, particularly edge information according to Canny Edges, that are related to at least one of the groups that particularly represent the non-critical classes for the application (for example, the above-mentioned at least one second one of the groups). It is thereby possible to achieve a more focused image generation by modifying the spatial layout restrictions based on class relevance. This means particularly that the layout specification can prioritize edge information for critical classes while de-emphasizing edges related to less important classes, such as background elements.

It is further possible that initially synthetic and/or sensor images are provided, particularly using a simulator, that represent the scene, and the generated images are generated based on the initially provided images, particularly to be used as training data and/or evaluation data for the machine learning system. In other words, it is possible that the method leverages existing synthetic or sensor images as a starting point. This initial dataset can serve as a foundation for generating new synthetic images, enhancing the training data for the machine learning system. Utilizing pre-existing imagery can accelerate the training process and improve the accuracy of the model.

It is possible that the provided classification specification provides the different classes in the form of categories to classify the images and particularly different objects represented in each of the images. The classification may be carried out based on pixels of the images and the provided categories. This pixel-based classification enables precise detection and/or identification and/or segmentation of objects within the synthetic images.

It is also possible that a semantic label map is provided for the represented scene.

Furthermore, it is possible that the division of the different classes comprises creating a mask from the semantic label map to isolate those of the classes that are relevant to the application, thereby dividing the different classes into the groups critical and non-critical classes. It is thereby possible to create a mask based on the semantic label map that highlights the classes crucial for the specific application. This mask can then be used to refine the layout specification, emphasizing the spatial arrangement of important elements while allowing more flexibility in representing less critical areas.

It is further possible that the scene is a traffic scene, and the machine learning system is trained and/or tested for being used in a driving system such as a driver assistant system and/or automated driving system. The generated synthetic images may therefore depict realistic traffic scenarios, enhancing the training data for driver-assistance and automated driving systems. This approach may allow the machine learning system, for example, to learn specific traffic situations, object interactions, and road conditions relevant to the specific application. The increased accuracy and diversity of the training data can lead to improved performance in real-world driving situations.

In another aspect of the invention, a machine learning system may be provided, trained and/or tested using the images generated by a method according to the invention as training and/or evaluation data. Thus, the machine learning system according to the invention can have the same advantages as have been described in detail with reference to a method according to the invention.

In another aspect of the invention, a computer program may be provided, in particular a computer program product, comprising instructions which, when the computer program is executed by at least one computer, cause the (at least one) computer to carry out the method according to the invention. Thus, the computer program according to the invention can have the same advantages as have been described in detail with reference to a method according to the invention.

In another aspect of the invention, an apparatus for data processing may be provided, which is configured to execute the method according to the invention. As the apparatus, for example, a computer can be provided which executes the computer program according to the invention. The computer may include at least one processor that can be used to execute the computer program. Also, a non-volatile data memory may be provided in which the computer program may be stored and from which the computer program may be read by the processor for being carried out.

According to another aspect of the invention a computer-readable storage medium may be provided which comprises the computer program according to the invention and/or instructions which, when executed by a computer, cause the computer to carry out the steps of the method according to the invention. The storage medium may be configured as a data storage device such as a hard disk and/or a non-volatile memory and/or a memory card and/or a solid-state drive. The storage medium may, for example, be integrated into the computer.

Furthermore, the method according to the invention may be implemented as a computer-implemented method. Alternatively, or additionally, at least one of the disclosed method steps may be computer-implemented and/or automated.

It is possible, according to the invention, for the trained and/or tested machine learning system to be used in a vehicle. The vehicle may, for example, be designed as a motor vehicle and/or passenger vehicle and/or at least partially automated/autonomous vehicle. The vehicle can have a vehicle device, e.g. for providing an autonomous driving function and/or a driver assistance system. The vehicle equipment can be designed to control and/or accelerate and/or brake and/or steer the vehicle at least partially automatically.

The machine learning system, in particular in the form of a machine learning model, is preferably trained for classification and in particular for object detection. The training can be intended to train the machine learning system / the machine learning model by means of a training data set for classification, in particular for image classification, of image data such as the generated images on the basis of pixels and/or pixel values, preferably edges or pixel attributes (of the image data). The initial images used for the generation process can, for example, result from a recording by at least one sensor, preferably at least one camera, preferably of a vehicle environment and particularly preferably of a camera environment and/or vehicle environment during driving (the vehicle).

The specific technical application may comprise at least one of the following: a classification and preferably detection of objects in images received from a camera of a vehicle and particularly a driving system (of the vehicle), a scene recognition based on images received from a camera of a driving system, a control of a vehicle based on the output of the machine learning system, a classification, a classification for objects in images, classification for identifying road signs, vehicles, or pedestrians within a vehicle's environment, or the support or optimization of vehicle control systems based on image recognition. Further, the application may comprise at least one of the following: monitoring and/or analysis of sensor data for driver assistance systems, autonomous driving functionalities, or real-time traffic assessment. Additionally, or alternatively, the application may comprise a task in an autonomous industrial system, such as defect detection in manufacturing processes, quality control through visual inspection, or categorization of products and materials based on image analysis. The classification may be carried out based on images received from at least one sensor and particularly camera of a vehicle, preferably an autonomous vehicle.

A scene specific to the application may therefore be a traffic scene, since the application may be used to recognise the traffic scene and/or to detect object in the traffic scene. In this case, the different classes for the represented scene may comprise different specific traffic-related scenarios that can be therefore considered as critical for the application, for example classes for other vehicles and pedestrians. The classes may also comprise less critical classes such as for a background or different weather conditions. Additionally, or alternatively, the scene specific to the application may be an industrial scene, e.g. in a production process.

Classification may be provided for various technical applications and particularly at least one of the above-mentioned applications. One example is the use of the classification in a vehicle. Based on the classification, in particular based on at least one classification result, at least one control action, preferably for a vehicle or for another technical system, may be initiated and/or carried out.

A classification result may comprise and/or be specific to at least one of the following results: a category of objects, an identification of objects, a position of objects and/or obstacles (e.g. in the direction of travel or next to the direction of travel), a presence of obstacles, a description of a traffic scene, a hazard or warning message, a number of objects, a type and/or position of lane markings and/or a lane boundary, a position and/or a status of traffic signalling systems, a position of a lane, or the like.

At least one control action for the vehicle may be initiated and/or carried out on the basis of the classification result. The control action may comprise at least one of the following: braking, steering, accelerating, overtaking manoeuvres, emergency braking, activation of an alarm system, activation of a hazard warning system, activation of a direction indicator, light control, or the like.

Classification can be used to recognise an obstacle, for example, regardless of whether it is directly in the direction of travel or next to it. Depending on the location (e.g. depending on the expected vehicle trajectory), a corresponding control action such as braking or swerving can be initiated.

The 'classification' and 'image classification' can also include 'object detection' or 'object detection in images'. In particular, this means classifying whether or not there are objects in certain areas of the image. In addition, the terms 'classification' and 'image classification' can also refer to 'semantic segmentation', in particular in the form of pixel-by-pixel classification.

Accordingly, the training can result in at least one trained machine learning model that can be used for classification and/or object detection. The specific (technical) application and thus the inference can be provided in a vehicle, for example.

Further advantages, features and details of the invention will be apparent from the following description, in which embodiments of the invention are described in detail with reference to the drawings. In this context, the features mentioned in the claims and in the description may each be essential to the invention individually or in any combination. Showing:
- Fig. 1:: A method, computer program, a storage medium and apparatus according to embodiments of the invention.
- Fig. 2:: Examples of synthetic images generated by a diffusion model.
- Fig. 3:: Another visualization of embodiment of the invention.

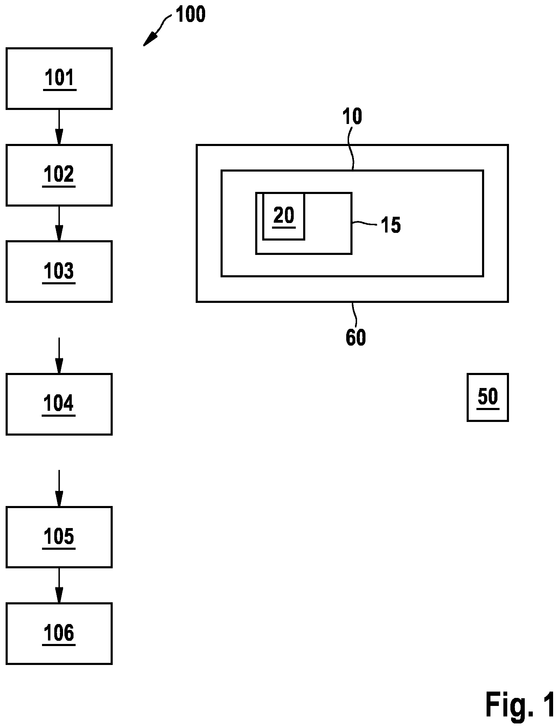

Fig. 1 shows a computer program 20 with instructions that, when the computer program 20 is executed by a computer 10, cause the computer 10 to carry out a method 100 according to embodiments of the invention. Furthermore, Fig. 1 shows a computer-readable storage medium 15 according to embodiments of the invention and the method 100 for a training and/or testing of a machine learning system 50 for a specific technical application, particularly for a vehicle 60.

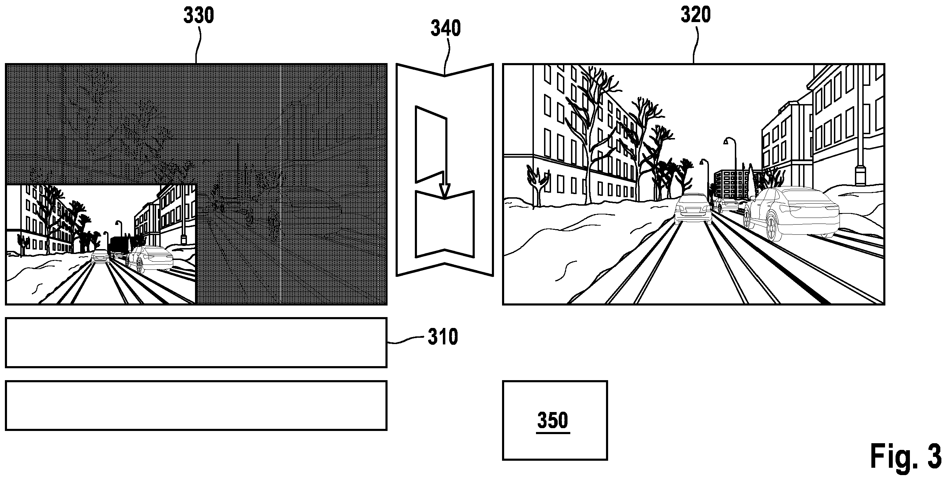

In the following, the method 100 is exemplarily described with regards to Fig. 1 and 3.

According to a first method step 101, at least one instruction 310 (like a text description or another image or something else) is provided for an image generation process 340 to generate synthetic images 320 that represent a scene specific to the application. The scene may be a traffic scene if the application is directed to a vehicle 60.

According to a second method step 102, at least one, particularly conditional, layout specification 330 is provided that specifies spatial restrictions for the generation process 340.

Then, according to a third method step 103, a classification specification 350 is provided that provides different classes for the represented scene. To this end, the classification specification 350 may comprise a semantic label map. The classes may comprise categories like "lane", "car, "wheel", "vehicle", "houses" or the like.

In a fourth method step 104, the different classes of the classification specification may be divided into at least two groups that represent different levels of relevance to the application. This could for example be a group for high and another group for a low relevance. A first one of the groups, with the higher relevance, may comprise classes like "lane" or "vehicles". A second one of the groups, with the lower relevance, may comprise: "background" or "snow".

Next, according to a fifth method step 105, at least one modification for the layout specification 330 is determined based on the divided classes. This allows to initiate the generation process 340 in a sixth method step 106 to generate the images 320 based on the at least one instruction 310 and the at least one modified layout specification 330. The modification may be carried out in a way that spatial areas of the images that correspond to at least one of the groups with lower relevance are given more freedom in the generation process compared to the spatial areas that correspond to the other group(s). In other words, the generation process 340 may be more constrained in spatial regions of the images 320 where pixels of the images 320 are classified into at least a first one of the groups for higher relevance to the application, and may be less constrained in spatial regions of the images 320 where pixels of the images 320 are classified into at least a second one of the groups for lower relevance to the application.

The described method according to embodiments of the invention therefore allows the generation process 340 to be carried out spatially constrained differently, controlled by the at least one modified layout specification 330.

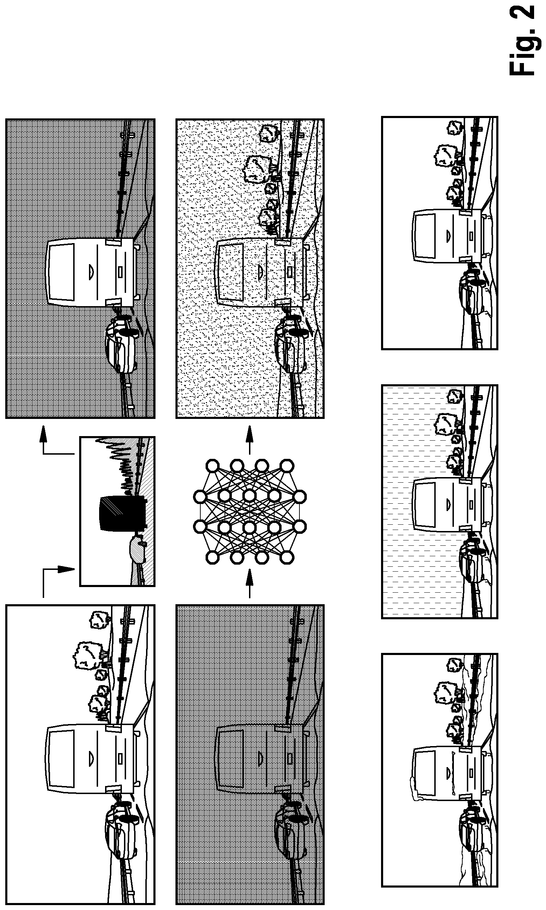

It is known that the synergy of Stable Diffusion and ControlNet can be used to create images that mimic those captured by vehicle cameras. Examples of synthetic images generated by a diffusion model are shown in Fig. 2. These synthetic images can particularly be crafted using two primary inputs: a conditional spatial layout, primarily using Edge detection techniques like Canny and HED for layout structuring, and a descriptive text prompt to define overarching image characteristics, such as a snowy road. Typically, layout conditions are based on Canny edges, which are computationally efficient and can be derived from both real and simulated imagery.

Embodiments of the invention address the needs of automated driving technology and introduce an approach to balance diversity and faithfulness in image generation. It focuses particularly on manipulating layout conditions exclusively for critical classes in the domain, such as Canny and HED Edges, utilizing class information available from semantic label maps derived from driving simulators or other sources.

In automated driving, not all objects are equally pertinent; for instance, background elements like trees may overly constrain image generation. Embodiments of the invention therefore use the possibility of creating Edge representations that emphasize critical objects like roads and road users, while allowing generative models to freely interpret less important areas, thereby enhancing the diversity of output images without compromising the accuracy of key elements.

A current method, as cited in Zhang, Lvmin, Anyi Rao, and Maneesh Agrawala. "Adding conditional control to text-to-image diffusion models." Proceedings of the IEEE/CVF International Conference on Computer Vision. 2023, involves assigning a global weight to spatial layout constraints relative to text prompts. However, this approach lacks the specificity of focusing on essential image areas, thereby limiting its effectiveness in nuanced applications like automated driving.

In Fig. 2, examples of synthetic images are shown that can be generated with the proposed approach. It is shown that the background differs across different images, since it is not constrained by the layout conditions (Canny Edges) - consequently increasing diversity of the layout.

Figure 3 visualizes an approach of synthetic image generation without selective filtering of important edge areas. It can be noted how the buildings (and their layout such as windows, etc) are constrained by the canny edges. With the proposed approach according to embodiments of the invention, however, the network would be able to "imagine" any suitable background that follows the training data distribution, without being constrained too much as exemplified here.

The methodology according to embodiments of the invention hinges on distinguishing "semantic classes" and particularly "important classes" within an automated driving context. Each pixel in an image belongs to a specific class, which can be identified through semantic segmentation or provided by driving simulators like Nvidia DriveSim. The core of the approach involves selectively focusing on important classes, like roads and vehicles, and de-emphasizing others during image generation. This process is outlined, as also shown in Fig. 1, in two phases:
PHASE I: Training:
   In this phase, any generative model trained with Canny Edge can be adapted for the approach described in Phase II, though applying similar class filtering during training is recommended for optimal results.
PHASE II: Inference:
   In this phase, the procedure involves using a combination of a base image, semantic label map, text description, and layout information (e.g., from HED or Canny edges). A mask is created from the semantic label map to isolate important classes. This mask is then used to filter the layout condition, removing edge information related to non-critical classes. Subsequently, images are generated using this tailored layout information. This approach aims to strike a balance between image diversity and fidelity, a feature not commonly addressed in current spatial layout conditions in generative models.

The primary advantage of this strategy lies in its ability to increase the variety of generated images without overly constraining them, especially in less critical areas for automated driving. This enables a nuanced control between faithfulness and diversity in image generation.

The above explanation of the embodiments describes the present invention in the context of examples. Of course, individual features of the embodiments can be freely combined with each other, provided that this is technically reasonable, without leaving the scope of the present invention.

## Claims

1. A method (100) for a training and/or testing of a machine learning system (50) for a specific technical application, comprising:
- Providing (101) at least one instruction (310) for an image generation process (340) to generate synthetic images (320) that represent a scene specific to the application,
- Providing (102) at least one layout specification (330) that specifies spatial restrictions for the generation process (340),
- Providing (103) a classification specification (350) that provides different classes for the represented scene,
- Dividing (104) the different classes of the classification specification into at least two groups that represent different levels of relevance to the application,
- Determining (105) at least one modification for the layout specification (330) based on the divided classes,
- Initiating (106) the generation process (340) to generate the images (320) based on the at least one instruction (310) and the at least one modified layout specification (330).

2. The method (100) of claim 1, **characterized in that** the method (100) further comprises at least one of the following steps:
- Providing training and/or evaluation data for the training and/or testing of the machine learning system (50) based on the generated images (320), the training and/or evaluation data particularly comprising the generated images (320) and/or further modified generated images (320)
- Carrying out the training and/or testing of the machine learning system (50) using the generated images (320) as training and/or evaluation data, particularly for the training and/or testing of the machine learning system (50) for the specific technical application, particularly an object and/or scene detection based on images that are recorded by a vehicle.

3. The method (100) of any one of the preceding claims, **characterized in that** the generation process (340) is spatially constrained differently, controlled by the at least one modified layout specification (330), and is thereby more constrained in spatial regions of the images (320) where pixels of the images (320) are classified into at least a first one of the groups for higher relevance to the application, and is less constrained in spatial regions of the images (320) where pixels of the images (320) are classified into at least a second one of the groups for lower relevance to the application.

4. The method (100) of any one of the preceding claims, **characterized in that** the layout specification (330) specifies the spatial restrictions in relation to the different classes, and that the determination (105) of the at least one modification comprises: removing those of the spatial restrictions, particularly edge information according to Canny Edges, that are related to at least one of the groups that particularly represent the non-critical classes for the application.

5. The method (100) of any one of the preceding claims, **characterized in that** initially synthetic and/or sensor images are provided, particularly generated, that represent the scene, and the generated images (320) are generated based on the initially provided images, particularly to be used as training or evaluation data for the machine learning system (50).

6. The method (100) of any one of the preceding claims, **characterized in that** the provided classification specification (350) provides the different classes in the form of categories to classify the images and particularly different objects represented in each of the images, wherein the classification is carried out based on pixels of the images (320) and the provided categories.

7. The method (100) of any one of the preceding claims, **characterized in that** a semantic label map is provided for the represented scene and that the division (104) of the different classes comprises: creating a mask from the semantic label map to isolate those of the classes that are relevant to the application, thereby dividing the different classes into the groups critical and non-critical classes.

8. The method (100) of any one of the preceding claims, **characterized in that** the scene is a traffic scene, and the machine learning system (50) is trained and/or tested for being used in a driver assistant and/or automated driving system, the technical application particularly comprising at least one of the following: a classification and preferably detection of objects in images received from a camera of the driving system, a scene recognition based on the images, a control of a vehicle based on the output of the machine learning system (50).

9. A machine learning system (50) trained and/or tested using the images (320) generated by a method (100) of any one of the preceding claims as training and/or evaluation data.

10. A computer program (20), comprising instructions which, when the computer program (20) is executed by at least one computer (10), cause the computer (10) to carry out the method (100) of any one of claims 1 to 8.

11. A data processing apparatus (10), comprising means for carrying out the method (100) of any one of claims 1 to 8.

12. A computer-readable storage medium (15) comprising instructions which, when executed by a computer (10), cause the computer (10) to carry out the steps of the method (100) of any one of claims 1 to 8.

## Amended claims

### Amended claims in accordance with Rule 137(2) EPC.

1. A method (100) for a training and/or testing of a machine learning system (50) for a specific technical application, comprising:
- Providing (101) at least one instruction (310) for an image generation process (340) to generate synthetic images (320) that represent a scene specific to the application,
- Providing (102) at least one layout specification (330) that specifies spatial restrictions for the generation process (340), wherein the spatial restrictions are associated with different pixels of the images,
- Providing (103) a classification specification (350) that provides different classes for the images in the form of categories to classify different objects represented in each of the images, wherein the layout specification (330) specifies the spatial restrictions in relation to the different classes,
- Dividing (104) the different classes of the classification specification into at least two groups that represent different levels of relevance to the application, wherein the levels of relevance are manually predefined, wherein each of the pixels of the layout specification are then mapped to one of the groups,
- Determining (105) at least one modification for the layout specification (330) based on the divided classes by removing restrictions for pixels that are mapped to a particular group,
- Initiating (106) the generation process (340) to generate the images (320) based on the at least one instruction (310) and the at least one modified layout specification (330),
- Carrying out the training and/or testing of the machine learning system (50) using the generated images (320) as training and/or evaluation data.

2. The method (100) of claim 1, **characterized in that** the method (100) further comprises at least one of the following steps:
- Providing training and/or evaluation data for the training and/or testing of the machine learning system (50) based on the generated images (320), the training and/or evaluation data particularly comprising the generated images (320) and/or further modified generated images (320)
- Carrying out the training and/or testing of the machine learning system (50) using the generated images (320) as training and/or evaluation data for the training and/or testing of the machine learning system (50) for the specific technical application, particularly an object and/or scene detection based on images that are recorded by a vehicle.

3. The method (100) of any one of the preceding claims, **characterized in that** the generation process (340) is spatially constrained differently, controlled by the at least one modified layout specification (330), and is thereby more constrained in spatial regions of the images (320) where pixels of the images (320) are classified into at least a first one of the groups for higher relevance to the application, and is less constrained in spatial regions of the images (320) where pixels of the images (320) are classified into at least a second one of the groups for lower relevance to the application.

4. The method (100) of any one of the preceding claims, **characterized in that** the determination (105) of the at least one modification comprises: removing those of the spatial restrictions, particularly edge information according to Canny Edges, that are related to at least one of the groups that particularly represent the non-critical classes for the application.

5. The method (100) of any one of the preceding claims, **characterized in that** initially synthetic and/or sensor images are provided, particularly generated, that represent the scene, and the generated images (320) are generated based on the initially provided images, particularly to be used as training or evaluation data for the machine learning system (50).

6. The method (100) of any one of the preceding claims, **characterized in that** the provided classification specification (350) provides the different classes in the form of categories to classify the images and particularly different objects represented in each of the images, wherein the classification is carried out based on pixels of the images (320) and the provided categories.

7. The method (100) of any one of the preceding claims, **characterized in that** a semantic label map is provided for the represented scene and that the division (104) of the different classes comprises: creating a mask from the semantic label map to isolate those of the classes that are relevant to the application, thereby dividing the different classes into the groups critical and non-critical classes.

8. The method (100) of any one of the preceding claims, **characterized in that** the scene is a traffic scene, and the machine learning system (50) is trained and/or tested for being used in a driver assistant and/or automated driving system, the technical application particularly comprising at least one of the following: a classification and preferably detection of objects in images received from a camera of the driving system, a scene recognition based on the images, a control of a vehicle based on the output of the machine learning system (50).

9. A machine learning system (50) trained and/or tested using the images (320) generated by a method (100) of any one of the preceding claims as training and/or evaluation data.

10. A computer program (20), comprising instructions which, when the computer program (20) is executed by at least one computer (10), cause the computer (10) to carry out the method (100) of any one of claims 1 to 8.

11. A data processing apparatus (10), comprising means for carrying out the method (100) of any one of claims 1 to 8.

12. A computer-readable storage medium (15) comprising instructions which, when executed by a computer (10), cause the computer (10) to carry out the steps of the method (100) of any one of claims 1 to 8.
